Europäisches Patentamt

(19) European Patent Office

Office européen des brevets

(11) EP 0 967 498 A1

## EUROPEAN PATENT APPLICATION

(43) Date of publication:
29.12.1999 Bulletin 1999/52

(51) Int. Cl.$^6$: **G02B 6/287**, G02B 6/293

(21) Application number: 98304896.8

(22) Date of filing: 22.06.1998

(84) Designated Contracting States:
AT BE CH CY DE DK ES FI FR GB GR IE IT LI LU MC NL PT SE
Designated Extension States:
AL LT LV MK RO SI

(71) Applicant:
Applied Fiber Optics, Inc.
Fremont, CA 94538 (US)

(72) Inventor: Chen, Peter Z.
Fremont, California 94538 (US)

(74) Representative:
W.P. THOMPSON & CO.
Celcon House
289-293 High Holborn
London WC1V 7HU (GB)

(54) **Apparatus and method of making a fiber-fused dense wavelength division multiplexer**

(57) The present invention relates to an apparatus and method of making a Dense Wavelength-Division Multiplexer (DWDM) using a Fused-Biconical Taper ("FBT") technique. The DWDM according to the present invention comprises a multiple of Multi-window Wavelength-Division Multiplexers ("MWDMs") which cascade together in several stages, each stage has several MWDMs having an identical window spacing. For a N-channel DWDM, there are $2^{m-1}$MWDMs cascaded in m-th stage, and the window spacing of the m-th stage MWDMs is $2^{m-1}\Delta\lambda$, where m is from 1 to (logN/log 2), for example, the first stage(m=1) having 1 MWDM and the window spacing is $\Delta\lambda$, the second stage(m=2) having 2 MWDMs and the window spacing is $2\ \Delta\lambda$, the third stage(m=3) having 4 MWDMs and the window spacing is $4\Delta\lambda$, etc., and the (logN/log2)-th stage has (N/2) MWDMs with a window spacing (N/2)$\Delta\lambda$. The number N could be 2,4,8,16 or more.

To make a FBT MWDM, first select two optical fibers about the same diameter, remove the buffer at a middle position for the two fibers, pull the two fibers axially with an angle and force an extended middle portion of the two fibers together, then heat the middle portion of the two fibers by a heating source, at the same time stretch the two fibers axially for a distance until a mode interference has occurred and then the characteristics of MWDM has appeared. The fused fibers are subsequently glued to a quartz substrate followed by sealing them to a container to make the FBT MWDM.

Fig. 1

## Description

### FIELD OF INVENTION

The present invention relates generally to Dense Wavelength-Division Multiplexer (DWDM), in particularly, relates to an apparatus and method of making a Dense Wavelength-Division Multiplexer using a Fused-Biconical Taper ("FBT") technique.

### BACKGROUND OF THE INVENTION

Modern information infrastructure requires constant expansions of transmission bandwidth to meet the need for high speed data transmission. Such need becomes increasingly imminent as the use of Internet to transmit a variety of data such as text, voice and video grows rapidly each year. As a consequence, the conventional coax cable system can no longer sustain this need due to a high transmission rate in the order of several tens of Gb/s is required for Internet transmission while the coax cable system is capable of providing a transmission rate only in the order of several tens of Mb/s. As an alternate, optical fiber, because its potential to achieve a high transmission bandwidth up to 100 Teraherz and to decrease transmission loss, is replacing coax cable as the building blocks for future high speed communication network.

Several fiber optic transmission systems have been proposed or developed. Among them, the Dense Wavelength-Division Multiplexing (DWDM) technology make it possible to raise the communication capacity for a single line fiber from about 2.5Gb/s up to over 10Gb/s. It allows several wavelength of light signals transmitting at one single fiber at the same tune without wavelength interference, each wavelength carrying different information signals to different destinations. The DWDM technology therefore holds the promise of greatly expanding telecommunication infrastructure without additional construction.

DWDM may be suitably incorporated into a variety of optic fiber systems to provide aforementioned advantages. For instance, DWDM can be used in a uni-directional optical fiber system to multiplex a number of signals, each about 2.5Gb/s. derived from input fibers at the transmitting end into a single optical fiber and subsequently demultiplex such signals from this single fiber optical line into a number of fibers carrying various channels to individual receivers at the receiving end. Similarly, DWDM can be used in a bi-directional optical fiber system in which DWDM is used to multiplex and demultiplex at both transmitting and receiving end. The lightwave transmission capacity per fiber depends mainly on the number of the light signals in the passband of the fiber optical amplifier known as Erbium-doped amplifiers. The bandwidth of the commercial Erbium-doped amplifiers is about 30nm at two communication bands, 1260 - 1360 nm and 1500 - 1650 nm.

The bandwidth of the light source is as narrow as 0.2 nm in DFB semiconductor laser. Most current DWDMs are capable of multiplexing or demultiplexing 4 (i.e., defined as a 1x4 DWDM), 8 (i.e., defined as a 1x8 DWDM) or 16 (i.e., defined as a 1x16 DWDM) optical signals located in different waveband to or from one fiber optical line. As such, DWDM is being used widely in all kinds of fiber optical system DWDM and becomes one of the key components in modem fiber optical systems.

A few Discrete Micro-Optic technologies have been successfully developed to construct DWDM such as Filter-DWDM using multi-layer interference filters, Grating-DWDM using holographic gratings and waveguide-DWDM using optical circuit waveguides. These devices are, however, disadvantaged by a limitation that the light signals transmitted thereof have to leave the optical fiber first, processing in free space and then reinput the optical fiber in operation. This has led to serious difficulties in device manufacturing and adjusting.

US patent 5,491,764 using twist FBT technique to make a narrow band Wavelength Division Multiplexer ("WDM") capable of multiplexing or demultiplexing two light signals known as two-channel WDM. This prior art device, however, does not teach construction of a narrow band WDM capable of multiplexing or demultiplexing a plurality of light signals requiring more than two channels because such prior art WDM is disadvantaged by high transmission losses resulting in a poor wavelength isolation insufficient to provide multi-wavelength transmission.

There is therefore an apparent need for an apparatus and method of making a low loss, inexpensive DWDM capable of providing a reliable multi-wavelength transmission in a fiber optical transmission system.

Accordingly, it is an object of this invention to provide a low loss, inexpensive and reliable narrow band DWDM comprising a plurality of FBT multi-window Wavelength Division Multiplexers ("MWDMs") for high speed, multi-wavelength transmission.

It is a further object of this invention to provide a method of making such FBT MWDMs by heating and stretching two optical fibers to form a FBT MWDM.

### SUMMARY OF THE INVENTION

The present invention represents an advancement in the art in that it produces methods for making an inexpensive and reliable DWDM that substantially obviates the problems of prior art WDM.

Prior to discussions of the present invention in details, it is necessary to set forth briefly the basic characteristics of a MWDM according to the present invention. A typical MWDM usually has two or more operation windows in each channel of the MWDM in a passband of the Erbium-doped fiber amplifier wherein the passband are 1260nm-1360nm and 1500nm-1600nm. The window positions of an individual channel are located at a high-loss wavelength region of the other channel such that the window positions of each channel are complemented to each other. All windows in the channels of the MWDM are periodically distributed with roughly the same window spacing period. A DWDM of the present invention may comprise several or a plurality of MWDMs.

A DWDM of the present invention comprises a multiple of MWDMs which cascade together in several stages, each stage has several MWDMs having an identical window spacing. For a N-channel DWDM, there are $2^{m-1}$ MWDMs cascaded in m-th stage, and the window spacing of the m-th stage MWDMs is $2^{m-1}\Delta\lambda$, where m is from 1 to (log/N/log2), for example, the first stage(m=1) having 1 MWDM and the window spacing is $\Delta\lambda$, the second stage(m=2) having 2 MWDMs and the window spacing is $2\Delta\lambda$, the third stage(m=3) having 4 MWDMs and the window spacing is $4\Delta\lambda$, etc., and the (logN/log2)-th stage has (N/2) MWDMs with a window spacing (N/2)$\Delta\lambda$. The number N could be 2, 4, 8, 16 or more.

The FBT MWDM provided by the invention is based on the mode interference in a fusing area. It comprises a crossed pair of first and second optical fibers about the same diameter fused together by a heating source at a middle position, the two fibers each having a longitudinal core surrounding by claddings. The two longitudinal cores and the claddings gradually tapered at an angle together at an extended middle portion thereof merging to form a fiber cavity for a distance having a smaller diameter than the diameter of the two fibers. The fused fiber is reversedly tapered at the same angle separating into two fibers again, forming a 2x2 MWDM which can also be used as a 1x2 MWDM with two branch channels. Both of the branch channels have the same window spacing and their window transmission positions are complemented with each other. The FBT MWDM further comprises a quartz substrate for maintaining a coupling region in a stable temperature.

To make a FBT MWDM, first select two optical fibers about the same diameter, remove the buffer at a middle position for the two fibers, pull the two fibers axially with an angle and force an extended middle portion of the two fibers together, then heat the middle portion of the two fibers by a heating source, at the same time stretch the two fibers axially for a distance until a mode interference has occurred and then the characteristics of MWDM has appeared. The fused fibers are subsequently glued to a quartz substrate followed by sealing them to a container to make the FBT MWDM.

## BRIEF DESCRIPTION OF THE DRAWING

FIG. 1 is the schematic diagram of an optical circuit of a N-channel dense wavelength-division multiplexer (DWDM) of present invention;

FIG. 2 is the schematic diagram of second embodiment of the optical circuit of a N-channel dense wavelength-division multiplexer (1xN DWDM) of present invention;

FIG. 3A is the schematic diagram of the optical circuit of a 4-channel dense wavelength-division multiplexer (1x4 DWDM) of present invention;

FIG. 3B is a front view of one embodiment of the 1x4 DWDM;

FIGS. 3C, 3D, 3E are respective spectral insertion loss for MWDMs 311, 321 and 322;

FIG. 4 shows the FBT MWDM being glued to a substrate;

FIG. 5 is the structure diagram of the tapering and coupling area of the FBT MWDM of present invention;

FIG. 6A shows two optical fibers in the process of being fused by stretching and heating;

FIG. 6B is a exemplary graphical curve of a FBT MWDM of the present invention to illustrate the relationship between the transmission and drawing time;

FIG. 6C is the a prior art graphical curve of a narrow band WDM disclosed by US patent 5,491,764;

FIG. 7 is a spectral insertion loss of a FBT MWDM of the present invention; and

FIGS. 8 A and B are insertion loss-wavelength diagram of a DWDM of present invention.

## DETAILED DESCRIPTION OF THE INVENTION

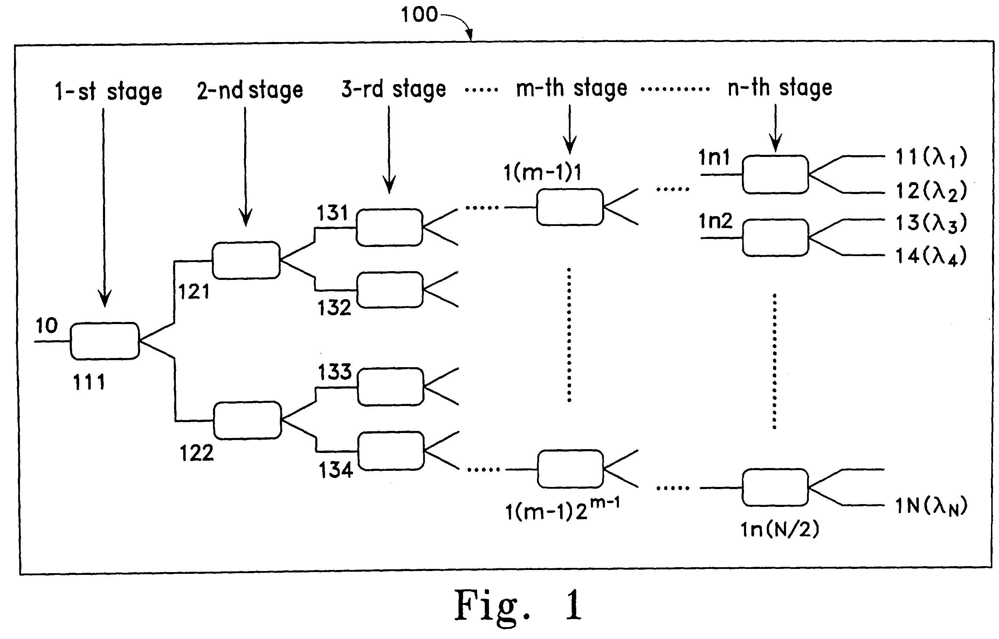

Referring to FIG. 1, there is shown a schematic logic circuit of an exemplary embodiment of a 1xN DWDM 100 of the present invention. The symbol "N" indicates the number of channels that are used to multiplex or demultiplex by the DWDM 100 any given input signals originated from an input fiber. The number "N" is equal to $2^m$ wherein "m" represents the number of times the DWDM 100 performing signal divisions for the given input signals prior to their being demultiplexed at a receiving end. As such, the DWDM 100 is known as a m-stage DWDM in which a MWDM 111 is a first stage WDM having a window spacing $\Delta\lambda$. Likewise, MWDMs 121, 122 are a pair of second stage WDMs, each with a window spacing $2\Delta\lambda$. MWDMs 131, 132, 133 and 134 are a plurality of third stage WDMs, each having a window spacing $4\Delta\lambda$. Each of the WDMs has a window with a center wavelength which varies with such WDM's stage sequence constituting the DWDM 100. Accordingly, it is theoretically possible to construct a DWDM in accordance with the present invention in which symbols 1m1, 1m2, ..., and 1m($2^{m-1}$) designate respectively each of the m-th stage WDMs constituting the DWDM. The channel window spacing of the m-th stage MWDMs is $2^{m-1}\Delta\lambda$, which is twice larger than a window spacing demonstrated by a m-1-th stage MWDM, yet one half of the size as compared to a window spacing demonstrated by a m+1-th stage MWDM. The number of stages, m, may be from 1 to n, wherein n=logN/log2 , to form a plurality of n-th stage MWDMs, **1n1, 1n2, ...., 1n(N/2)**. Each of the constituting WDMs could be a regular narrowband WDM. Each channel has only one window having a characteristic center wavelength identical to or in close resemblance to a particular center wavelength originated from and transmitted by the corresponding windows in the first stage WDM. For instance, each of the windows included in the channel pathways **111-131** and **111-132** has a center wavelength identical to a center wavelength in a corresponding window of the channel **121**. Each of the windows in the channel pathways **111-133** as well as **111-134** has a center wavelength identical to a center wavelength in a corresponding window of the channel **122**.

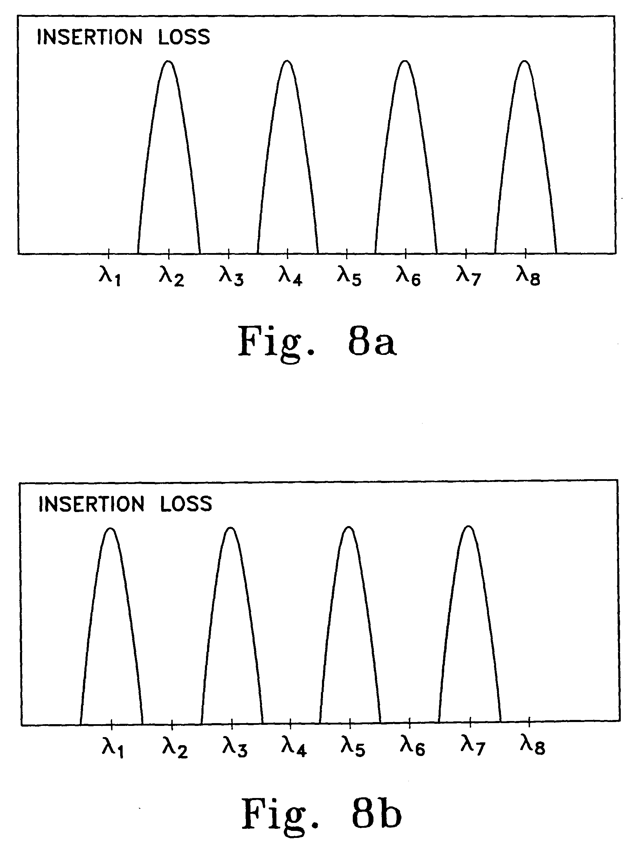

For demultiplexing application, lightwave signals entered from a fiber **10** to the MWDM **111** according to the present invention are demultiplexed into two series. The first series is transmitted to the WDM **121** with wavelengths $\lambda_1$, $\lambda_3$, ......, $\lambda_{N-1}$. The second series is transmitted to the WDM **122** with wavelengths $\lambda_2$, $\lambda_4$, ......, $\lambda_N$. **FIGS. 8A** and **8B** show a typical spectral transmission of the two series lightwave signals with respect to wavelength distributions in which N is 8. After multiple demultiplexing in next stages, the light signals are demultiplexed into N individual channels and transmitted to N individual fibers **11, 12. ..., 1N**. Multiplexing processing works just the reverse way, lightwave signals transmitting from N individual fiber **11, 12, ..., and 1N** are multiplexed into one fiber **10** as illustrated in **FIGS. 8a** and **8b.**

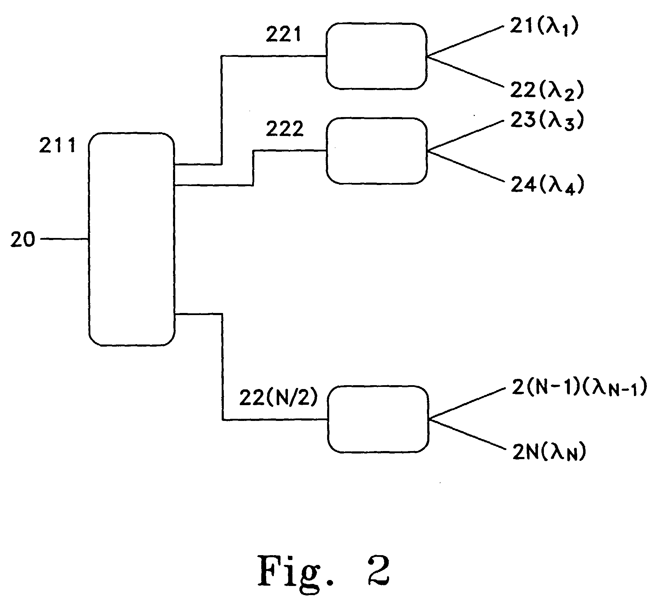

**FIG. 2** shows a schematic logic circuit of another exemplary embodiment of a 1xN DWDM **200** of the present invention. It includes a n-1 stage DWDM **211** and a series of N/2 narrowband WDMs **221, 222, ..., and 22(N/2)**, where $2^n$=N . They are cascadedly connected. The channel spacing of the narrowband WDMs **221, 222,..., and 22(N/2)** are half of the channel spacing of the DWDM **211**. The center wavelength of each channel of the DWDM **211** is an average value of the two center wavelengths of two branch channels in the narrowband WDMs connected to the channel of **211**.

For demultiplexing application, lightwave signals entered from a fiber **20** to **211** are demultiplexed to N/2 individual lights with different center wavelengths, $(\lambda_1+\lambda_2)/2$, $(\lambda_3+\lambda_4)/2$, ..., $(\lambda_{N-1}+\lambda_N)/2$. Each lightwave signal is demultiplexed to two signals in each of the WDMS **221, 222, ..., and 22(N/2)** such that the lightwave signals from the fiber **20** are demultiplexed to N individual fibers. In other words, the lightwave signal with the center wavelength $(\lambda_1+\lambda_2)/2$ is divided to two light signals transmitting in the fiber **21** with a center wavelength $\lambda_1$, and the fiber **22** with a center wavelength $\lambda_2$. The lightwave signal with the center wavelength $(\lambda_3+\lambda_4)/2$ is divided to two light signals transmitting in the fiber **23** with a center wavelength $\lambda_3$ and the fiber **24** with a center wavelength $\lambda_4$ and, likewise, the lightwave signal with the center wavelength $(\lambda_{N-1}+\lambda_N)/2$ is divided to two light signals transmitting in the fiber 2(N-1) with a center wavelength $\lambda_{N-1}$ and the fiber 2N with a center wavelength $\lambda_N$. The multiplexing processing works just the reverse way in which the N light signals transmitting from N individual fibers **21, 22,..., and 2N** are multiplexed into the single one fiber **20.**

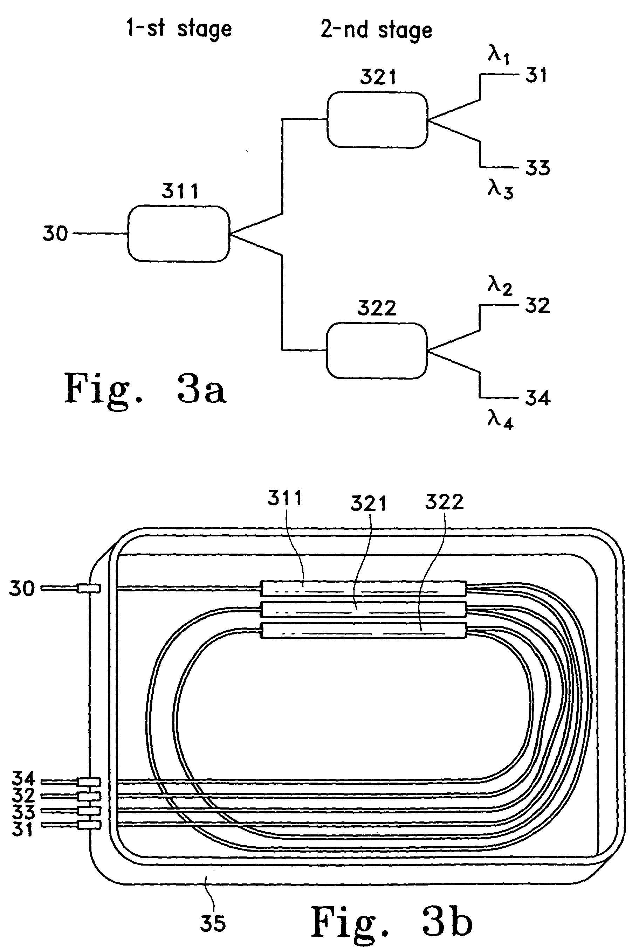

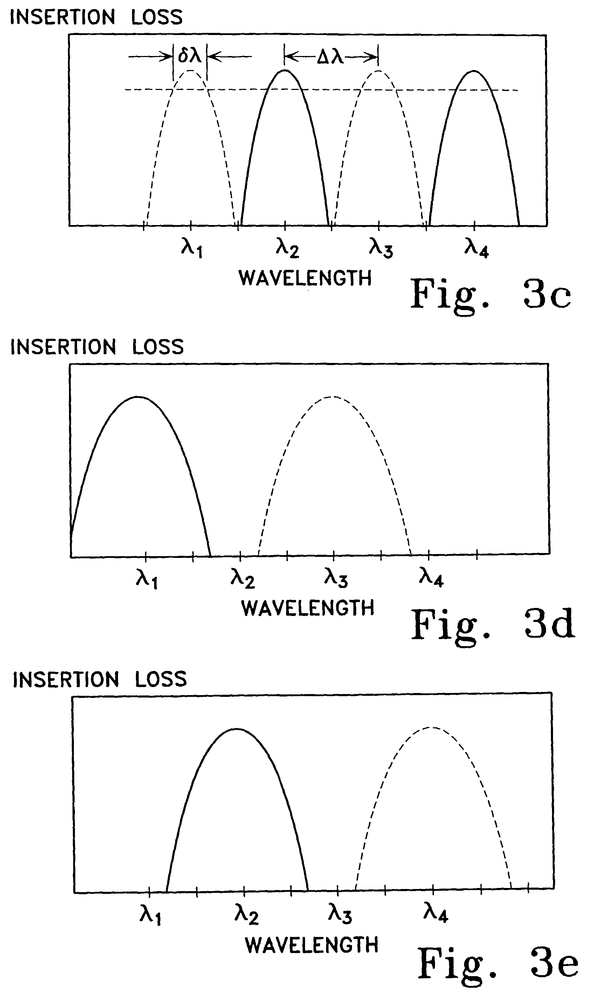

Referring to **FIGs 3A-3E,** the embodiments set forth above in **FIGs 1** and **2,** are further elaborated by way of examples. These examples are intended for purposes of illustration and should not be construed as any means for limitation. As an example, a 1x4 DWDM of present invention is a 2 stage DWDM including 3 MWDMs cascadedly connected and sealed within a container. **FIG. 3a** shows the logic circuit of a 1x4 DWDM **300** which is also known as a 4-channel DWDM according to the present invention. The first stage MWDM **311** is connected to two second stage MWDMs **321** and **322**. For multiplexing processing, light signals $\lambda_1$, $\lambda_2$, $\lambda_3$, and $\lambda_4$ are entered to fibers **31, 32, 33** and **34** respectively. The MWDM **321** multiplexes the light signals $\lambda_1$ and $\lambda_3$ into the channel **30-321**. The window spacing of channels **311-31** and **311-33**, is about $4\Delta\lambda$. The MWDM **322** multiplexing the light signals $\lambda_2$ and $\lambda_4$ into the channel **30-322**. The window spacing of **311-32** and **311-34** is about $4\Delta\lambda$. The MWDM **311** multiplexes the light signals at the channels **30-321** and **30-322** into the fiber **30**. The window spacing of the channels **30-311** and **30-322** are about $2\Delta\lambda$, which is one half of the window spacing as those of channels **311-31, 311-33, 311-32** and **311-34** such that the three MWDMs work together to multiplex four single light signals with center wavelengths $\lambda_1$, $\lambda_2$, $\lambda_3$, and $\lambda_4$ transmitted in four individual fibers into one fiber. **FIG. 3B** is a front view of an actual physical structure diagram of the 1x4 DWDM described herein. The MWDMs **311, 321** and **322** are cascaded according to the optical circuit described in **FIG. 3A** and packaged in a container **35**. The demultiplexing processing works just the reverse way in which the lightwave signals transmitted in the fiber **30,** having four windows positions at center wavelengths $\lambda_1$, $\lambda_2$, $\lambda_3$, and $\lambda_4$, are demultiplexed to four single window light signals transmitting at individual fibers **31, 32, 33** and **34.** **FIGS. 3C, 3D,** and **3E** show the respective spectral insertion loss of the MWDMs **311, 321** and **322** wherein $\Delta\lambda$ is the window spacing and $\delta\lambda$ is the window bandwidth. The dash curve and the solid curve in **FIG. 3C** indicates respectively the insertion loss in channels 30-321 and 30-322. The dash curve and the solid curve in **FIG. 3D** indicates respectively the insertion loss in channels 34-311 and 32-311. The dash curve and the solid curve in **FIG. 3E** indicates respectively the insertion loss in channels 33-311 and 31-311.

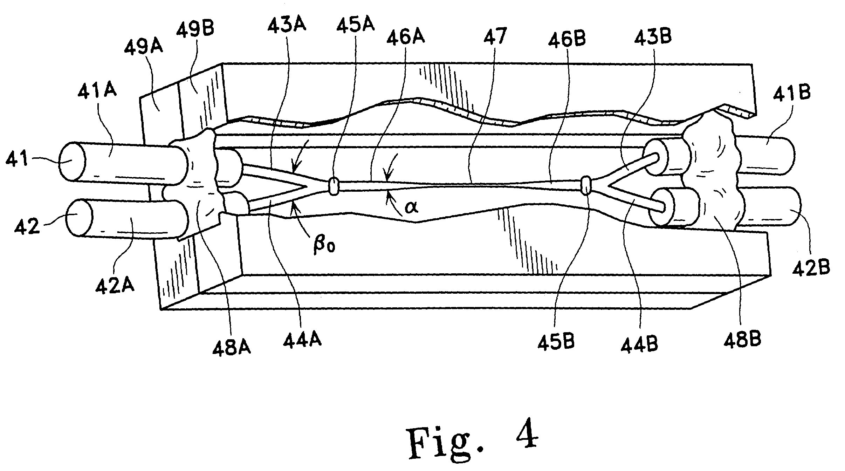

Referring to **FIG. 4,** there is shown a structure of a 2x2 MWDM **400** according to the invention. The numerals **41A** and **41B** are two ends of a first fiber **41**. The numerals **42A** and **42B** are two ends of a second fiber **42**. These two fibers are crossed two times or more at a cross angle $\beta_0$ and fused together around an extended center portion of each by local heating and stretching to create a biconical structure referred to as a tapered fiber. The first conic **46A** and the second conic **46B** are formed at a tapering angle $\alpha$. The numeral **47** is a fiber cavity having a smaller diameter than the diameters of the first and the second fiber **41** and **42**. The numeral **49A** is a quartz substrate, **49B** is a housing cover. The fiber ends, **41A**, **41B**, **42A** and **42B** are firmly glued to or fused by laser to the quartz substrate **49A**. The fibers are vulcanized at room temperature. The housing cover could be a stainless steel tuber or any other metal plastic tuber.

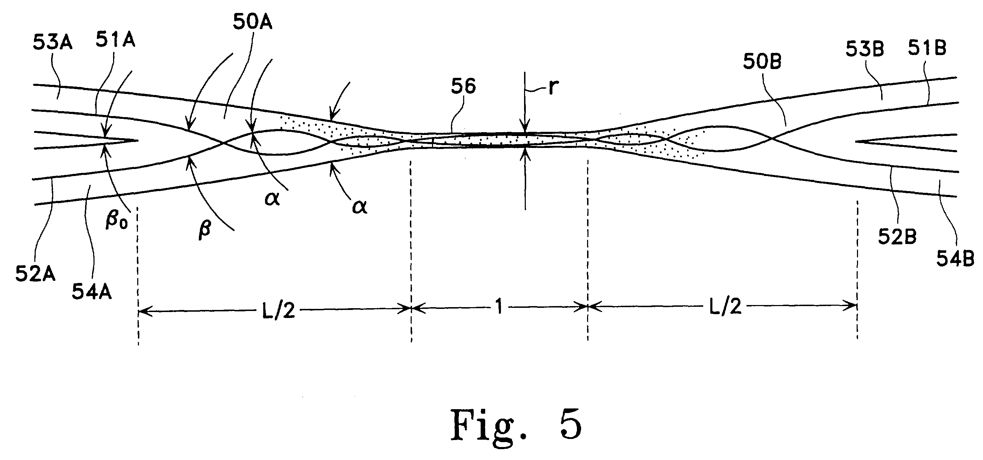

FIG. 5 shows the detailed structure of a coupling area including the first conic **50A**, a fiber cavity **56** and the second conic **50B**. The first conic and the second conic **50A** and **50B** have same taping angle $\alpha$ and length **L**. The fiber cavity **56** has a diameter **r** and length **l**. The first conic **50A** has a first core **51A** and a second core **52A** as well as a surrounding cladding **53A** and **54A**. The second conic **50B** has a first core **51B** and a second core **52B** as well as a surrounding cladding **53B** and **54B**. The cores **51A** and **52A** are cross one time at least in the first conic **50A**. The core **51B** and **52B** are crossed one time at least in the second conic **50B**. The crossing angles are same as $\beta_0$. In order to achieve the multiwindow transmission effect, a variety of geometrical parameters of the coupling area plays a decision role. The length **l** of the fiber cavity **56** is in a range of 5 to 30 mm, the diameter r of the fiber cavity is in a range of 3 to 20 $\mu$m, the tapered angle $\alpha$ is between 0.05°-5°, and the ratio **L/l** is about 0.3-1.5, for example, if the length of the fiber cavity **l** is about 20mm, then the length of pulling distance **L** is about 6-45mm such that **l** is determined substantially by a length of heating area at which a fire frame is used to facilitate fiber fusion. The length of the fiber cavity **l** is fixed in the pulling process while the pulling distance **L** will increase with the lapse of the pulling time.

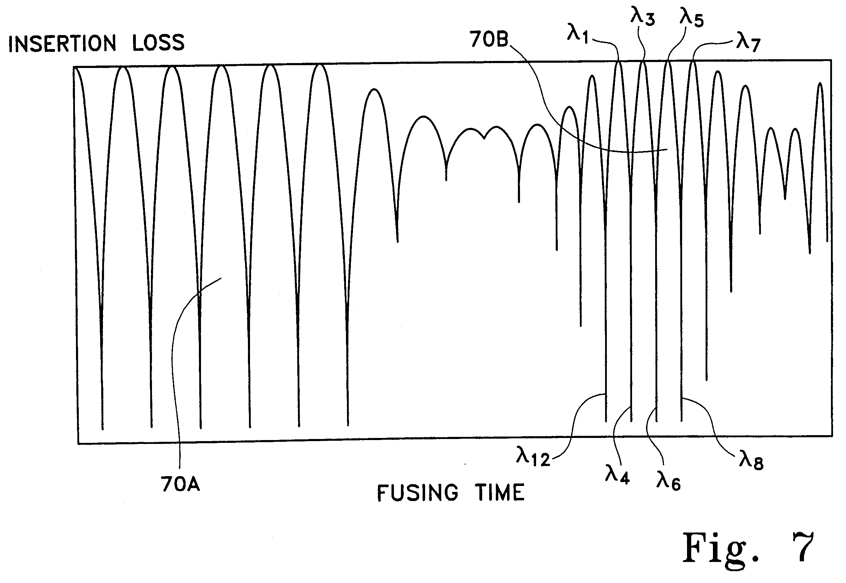

Referring now jointly to **FIGs. 5** and **7**, the optical characteristic of the MWDM constructed according to **FIG. 5** is discussed. As wideband light signals input in the first core **51A** from a single-mode, they are not transmitting along the core **51A**, because incident angles of the light beams transmitting in **51A** is dependent on the times of reflection (s) at interface surfaces between the core and the cladding, the incident angles of the light could be 90-$\alpha$-$\beta$, 90-2$\alpha$-$\beta$, 90-3$\alpha$-$\beta$, ..., 90-s$\alpha$-$\beta$. If s$\alpha$+$\beta$ is large enough and the incident angle 90-s$\alpha$-$\beta$ is less than Frenal angle at the interface surfaces of the core and the cladding, instead of transmitting in multi-mode in the surrounding claddings **53A** and **53B** and the fiber cavity **56,** the lights in different mode have different transmission angles and different optical lengths in the fife cavity **56**. As a consequence, these lights will interfere with each other in the second conic or tapering area **50B**. When these signals left the second conic **50B,** they are transmitting in the two core **51B** and **52B** and back to single-mode again, thereby changing to two signals redistributed by their wavelengths.

FIG. 7. illustrates a spectral transmission of one of the channels **51A-51B** and the channels **51A-52B**. The spectral transmission is a sine curve enveloped by another sine curve to form a series of wave pockets. As an example for illustration, **70A** and **70B** designate the first two pockets of such series of wave pockets. There are a couples of low loss transmission peaks in every pocket. For instance, the transmission loss reaches minimum at the wavelengths $\lambda_2$, $\lambda_4$, $\lambda_6$, $\lambda_8$, and reaches maximum at the wavelengths $\lambda_1$, $\lambda_3$, $\lambda_5$, $\lambda_7$ in the pocket **70B** at the first core **52B**. Notably, the longer the fusing time, the lower the number of the transmission peak and more narrow the window spacing. This is the main difference between the present invention and the prior art WDM.

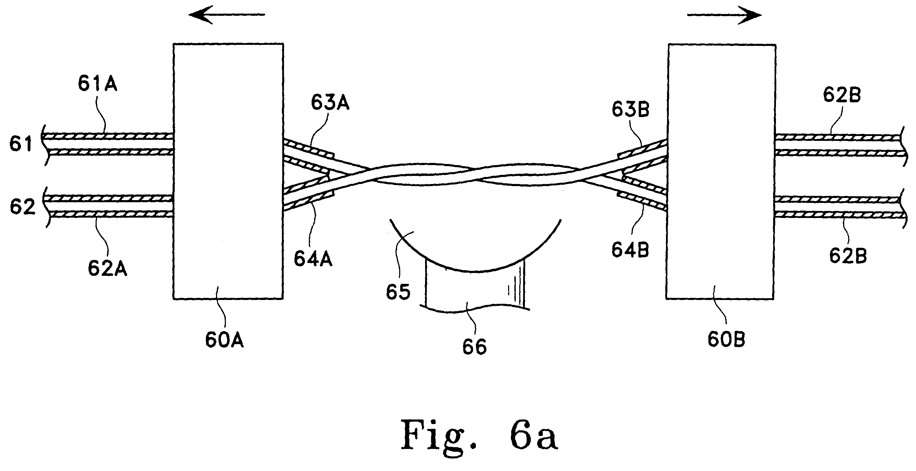

The method of fabrication of the fused MWDM of the present invention is illustrated in **FIG. 6A**. The first fiber **61** has a first end **61A** and a second end **61B**. The second fiber **62** has a first end **62A** and a second end **62B**. A wideband light source $\lambda_0$ is entered either to **61A** or to **62A**. Either **61B** or **62B** is being monitored by a power meter to determine the time when the drawing stopped. The output light from the light source $\lambda_0$ is monitored by an optical spectral analyzer to determine whether the multi-window transmission phenomenon of the fused fiber is appearing. A first step in the fabrication involves removal of buffers **63A** and **64B** as well as **63B** and **64B** from the two optical fibers **61** and **62** for some distance (about 10-50mm) around an extended central portion of these fibers, then etching the optical fibers to adjust the thickness of the cladding (the thickness change is around 0-30um), forcing the two fibers together at the center place by crossing the two fibers several times at a crossing angle $\beta_0$ or use some other mechanical means to put the center place together, presenting the length of the fiber above a fire frame **65** by adjusting a heating source **66**, heating the center place until the two fibers fused together, then start moving a pair of fiber holders **60A** and **60B** away from each other with a first constant speed and then gradually a slow speed in range of 1cm/minute to 50cm/minute to form two fused biconical tapers, each respectively on one end of the fiber cavity **56** until appearance of the multi-window transmission curve with a predetermined window spacing to the optical spectral analyzer and a maximum output power on the power meter. The length of the fiber cavity **56** is same as the length of fiber in the heating area. It is advisable that the stretched distance of the fused fiber is preferably about 0.3-1.5 times of the length of the heating area, which is the length of the fibers presented to the fire frame **65** during the tepering process.

The etching method could be chemical corrosion, laser abrasion or ion milling techniques. The heating method could be a fire heating, arc discharging heating or laser heating. The way to put the two fibers together could be crossing them together, twisting them together or parallel fixing the two ends of each fiber followed by forcing the center place together. It also requires a fast response monitor system like an optical spectral analyzer, DWDM analyzer, or other multi-channel power meters to monitor the heating and stretching process for detecting the MWDM characteristics.

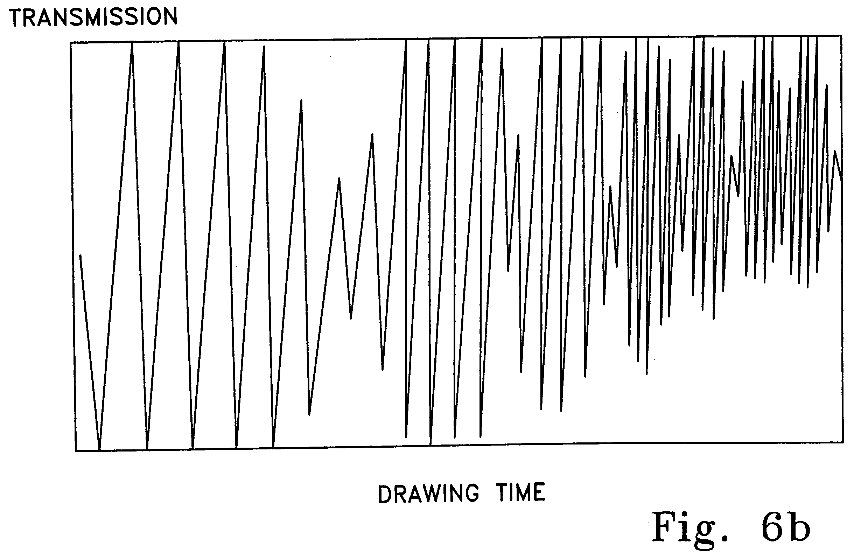

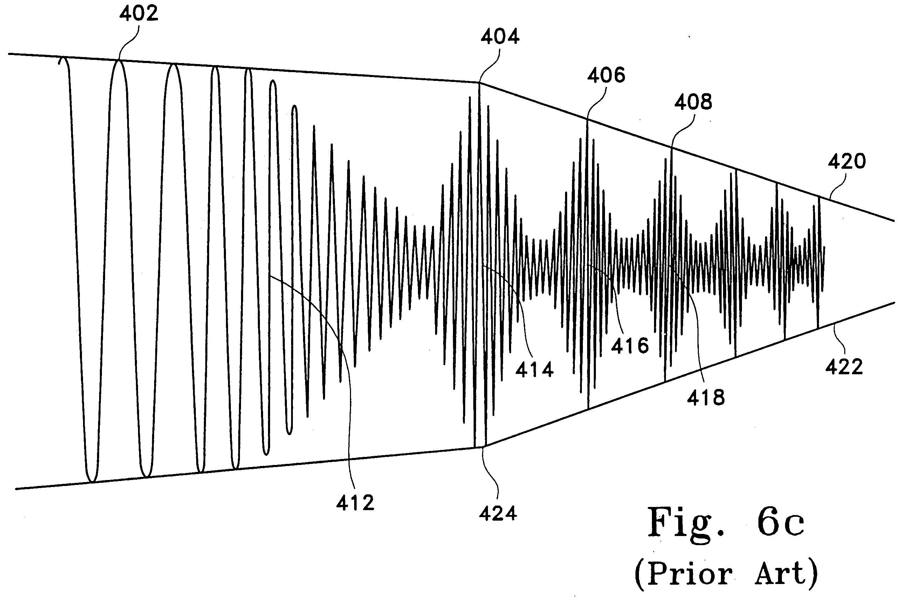

Referring to **FIG. 6B,** there is shown a graphical representation of an exemplary waveform output from the power meter. The spectral transmission is a sine curve enveloped by another sine curve to form a series of wave pockets. At each peak, several of the signals will reach a maximum and the others a minimum. The difference between the maximum and the minimum is known as "an isolation" between signals. There are a couples of low loss transmission peaks in every pocket and the insertion losses at such peak wavelengths in all wave pockets are near 0 dB. Compared to the prior art spectrum disclosed by U. S. patent 5,491,764 as graphically illustrated in **FIG. 6C,** the waveform output from the narrow band prior art WDM has a sinusoidal wave pattern consisting of several peaks as indicated by reference numerals **402, 404, 406, 408.** At each of such peaks, only one of the signals will reach a maximum and the other a minimum. Consequently, the prior art WDM is incapable of being used as a multi-window wavelength division multiplexer because it is inherently limited to enable only one, not several, of the signals to reach a maximum and the other a minimum transmission. Furthermore, Unlike the spectral transmission illustrated by the present invention, the prior art WDM appeared to suffer significant transmission losses, such losses enlarged as the drawing time increased, which resulted in the decreases in the isolation between signals such that the signal wavelengths will eventually merge, as shown by the two converging lines **420, 422.** In view of the foregoing, it is clearly that the twisted optical fiber WDM of the prior art is incapable of forming a MWDM having more than two channels. It is further noted that the present invention uses a crossed pair of fibers, instead of a prior art twisted pair of fibers, to improve the polarization dependent loss.

This fused biconical tapered fiber optical coupler are covered with a substrate **49A,** as shown in **FIG. 4.** Each end of fusing fiber are fixed on **49A** by using glue ball with a very small diameter or by using other welding techniques. At the ends **48A** and **48B,** the fibers are fixed and sealed with an epoxy to prevent any particles from entering into the coupling area.

The invention now being fully described, it will be apparent to one of ordinary skill in the art that many changes and modifications can be made thereto without departing from the spirit or scope of the invention as set forth herein.

## Claims

1. A multi-window wavelength-division multiplexer (MWDM), comprising:

   a first and a second optical fibers about the same diameter crossed and fused together by a heating source at a mid-position, said two fibers each having a longitudinal core surrounding by claddings and each having a first end and a second end, said two longitudinal cores and claddings gradually tapered at an angle together for a length at said mid-position merging to form a fiber cavity extended therefrom for a distance with a diameter smaller than that of said two fibers, said fused fiber reversely tapered at said angle separating into two fibers to form a fused bi-conical fiber, said fused bi-conical fiber is subsequently fixed by two glue balls on a substrate and covered by a sealed tube to form a 2x2 MWDM;
   wherein a first light entering said first end of said first fiber appears on said second end of said first fiber and a second light entering said first end of said first fiber appears on said second end of said second fiber;
   wherein a first light entering said second end of said first fiber appears on said first end of said first fiber and a second light entering said second end of said second fiber appears on said first end of said first fiber;
   wherein said first light has a first set of wavelengths and said second light has a second set of wavelengths, said first set and second set of wavelengths each consisting of a multiple of different wavelengths in the range of 1280nm to 1380nm and 1400nm to 1600nm; and
   wherein each of said multiple of different wavelengths from said first set and second set of wavelengths has a window spacing identical with another and said wavelengths in said two sets are complemented to each other.

2. The multi-window wavelength-division multiplexer (MWDM) in accordance with claim 1 wherein said angle of which said two fibers crossed and fused together is about 0.05° - 5°

3. The multi-window wavelength-division multiplexer (MWDM) in accordance with claim 1 or 2 wherein said heating source has a heating area extended for a length which is about 0.3-1.5 times of the length of the tapering area of said two fibers.

4. The multi-window wavelength-division multiplexer (MWDM) in accordance with claim 3 wherein the length of said heating area is about 5-30mm.

5. The multi-window wavelength-division multiplexer (MWDM) in accordance with any preceding claim wherein the diameter of said fiber cavity is about 3-20μm.

6. The multi-window wavelength-division multiplexer (MWDM) in accordance with any preceding claim wherein said 2x2 MWDM can be used as a 1x2 MWDM having two branch channels, said branch channels have a window spacing identical to each other.

7. The multi-window wavelength-division multiplexer (MWDM) in accordance with claim 6 wherein said two branch channels have transmission window positions complementary to each other.

8. A multi-channel dense wavelength-division multiplexer (DWDM), comprising a plurality of 1x2 MWDMs which are cascaded together in several sequential stages to form a wavelength division multiplexer, first stage has one 1x2 MWDM having two branch channels to provide connection to a subsequent stage, said subsequent stage has several 1x2 MWDMs each having two branch channels connected to two 1x2 MWDMs of a next stage wherein each of said 1x2 MWDMs of same stage has a window spacing substantially identical to another yet said window spacing is doubled compared to that of a previous stage, the MWDMs of each stage have window positions complementary to each other.

9. The multi-channel dense wavelength-division multiplexer (DWDM) in accordance with claim 8, wherein said plurality of 1x2 MWDMs consists of three 1x2 MWDMs such that the two branch channels of said first stage's MWDM connect to two second stage's MWDMs to form a 4-channel DWDM.

10. The multi-channel fused dens wavelength-division multiplexer (DWDM) in accordance with claim 8, wherein said plurality of 1x2 MWDMs consists of seven 1x2 MWDMs such that the two branch channels of the first stage's MWDM connect to two second stage's MWDMs, and the 4 branch channels of the second stage's MWDMs connect to four of the third stage's MWDMs to form a 8-channel DWDM.

11. The multi-channel fused dens wavelength-division multiplexer (DWDM) in accordance with claim 8, wherein said plurality of 1x2 MWDMs consists of fifteen 1x2 MWDMs such that the two branch channels of the first stage's MWDM connect to two of the second stage's MWDM, and the 4 branch channels of the second stage's MWDMs connect to four of the third stage's MWDMs, and the 8 branch channels of the third stage's MWDMs connect to eight of the forth stage's MWDMs to form a 16-channel DWDM.

12. The multi-channel dens wavelength-division multiplexer (DWDM) in accordance with claim 8 wherein one of the two branch channels of the first stage's MWDM connect to one second stage's MWDM to form a 3-channel DWDM.

13. A 2N-channel dense wavelength-division multiplexer (DWDM), comprising one N-channel DWDM and N number of 1x2 MWDMs where N is more than two, said N-channel DWDM having a series of branch channels, each of said branch channels being connected to one 1x2 MWDM such that said 1x2 MWDMs have a window spacing equal to half of a window spacing of said N-channel DWDM.

14. The 2N-channel dense wavelength-division multiplexer (DWDM) in accordance with claim 13 wherein N is 4.

15. The 2N-channel dense wavelength-division multiplexer (DWDM) in accordance with claim 13 wherein N is 8.

16. A method for fabricating a multi-window wavelength-division multiplexer (MWDM), comprising:

   selecting two optical fibers having the same diameter;
   removing a buffer at a mid-position of said two fibers;
   pulling said two fibers axially and forcing the mid-position of said two fibers together;
   heating the mid-position of said two fibers by a heating source until it starts fusing;
   stretching said two fibers axially for a distance until the two fibers exhibiting multi-window transmission characteristics, said two fibers tapered at an angle merged to one fined fiber with a diameter smaller than any of said two fibers and then reversely tapered at the same angle to separate said fused fiber to two fibers; and
   sealing said two fibers which have fused together to a substrate container thereby making a multi-window wavelength-division multiplexer (MWDM).

17. The method for fabricating a multi-window wavelength-division multiplexer (MWDM) in accordance with claim 16 wherein said heating source has a heating area having a length for heating, said length is about 1-3 times of a distance in which said fused fiber being stretched.

18. The method for fabricating a multi-window wavelength-division multiplexer (MWDM) in accordance with claim 17 wherein the length of said heating area is about 5-30mm.

19. The method for fabricating a multi-window wavelength-division multiplexer (MWDM) in accordance with claim 16, 17 or 18 wherein said angle of which said two fibers merging together is about 0.2-8°.

20. The method for fabricating a multi-window wavelength-division multiplexer (MWDM) in accordance with claim 16, 17, 18 or 19 wherein said smaller diameter of said fused fiber is about 3-20 $\mu$m.

21. The method for fabricating a multi-window optical fiber wavelength-division multiplexer (MWDM) in accordance with any one of claims 16 to 20 wherein said mid-position of said two fibers is forced together by crossing the mid-position of said two fibers in an angle of between 0-980°.

22. The method for fabricating a multi-window optical fiber wavelength-division multiplexer (MWDM) in accordance with any one of claims 16 to 21 wherein said the mid-position of said two fibers may be forced together by twisting the mid-position of said two fibers for 2-5 times in the heating area.

23. The method for fabricating a multi-window wavelength-division multiplexer (MWDM) in accordance with any one of claims 16 to 22 wherein said substrate container is a fused silica groove inside a stainless tube.

24. The method for fabricating a multi-window wavelength-division multiplexer (MWDM) in accordance with any one of claims 16 to 23 wherein said the two fibers are fixed on the substrate by firmly gluing both side of the fused portion of said two fibers near two ends of the substrate.

25. The method for fabricating a multi-window optical fibre wavelength-division multiplexer (MWDM) in accordance with any one of claims 16 to 23 wherein said two fibres are sealed in the substrate by using laser to firmly fuse both side of the fused portion of said two fibers near two ends of the substrate.

Fig. 1

EP 0 967 498 A1

Fig. 2

Fig. 3a

Fig. 3b

Fig. 3c

Fig. 3d

Fig. 3e

Fig. 4

Fig. 5

EP 0 967 498 A1

Fig. 6a

TRANSMISSION

DRAWING TIME

Fig. 6b

Fig. 6c
(Prior Art)

Fig. 7

INSERTION LOSS

FUSING TIME

$\lambda_1$  $\lambda_3$  $\lambda_5$  $\lambda_7$

$\lambda_{12}$  $\lambda_4$  $\lambda_6$  $\lambda_8$

70A

70B

EP 0 967 498 A1

Fig. 8a

Fig. 8b

## European Patent Office

**EUROPEAN SEARCH REPORT**

Application Number

EP 98 30 4896

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CN 1 151 529 A (CHEN ZUPEI) 11 June 1997 & US 5 809 190 A (CHEN PETER ZUPEI) 15 September 1998 * the whole document * | 1-25 | G02B6/287 G02B6/293 |
| X,D | US 5 491 764 A (HU ANDONG  ET AL) 13 February 1996 * the whole document * | 16 | |

TECHNICAL FIELDS
SEARCHED      (Int.Cl.6)

G02B

The present search report has been drawn up for all claims

| Place of search | Date of completion of the search | Examiner |
|---|---|---|
| THE HAGUE | 24 November 1998 | Jakober, F |

EP 0 967 498 A1

ANNEX TO THE EUROPEAN SEARCH REPORT
ON EUROPEAN PATENT APPLICATION NO.                    EP 98 30 4896

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-1998

| Patent document cited in search report | Publication date | Patent family member(s) | Publication date |
|---|---|---|---|
| CN 1151529 A | 11-06-1997 | US 5809190 A | 15-09-1998 |
| US 5491764 A | 13-02-1996 | NONE | |